(19) Europäisches Patentamt
European Patent Office
Office européen des brevets

(11) **EP 4 266 005 A1**

(12) **EUROPEAN PATENT APPLICATION**

(43) Date of publication:
**25.10.2023  Bulletin 2023/43**

(21) Application number: **23165134.0**

(22) Date of filing: **29.03.2023**

(51) International Patent Classification (IPC):
**G01C 21/20** (2006.01)    **G01C 21/00** (2006.01)
**G06T 7/73** (2017.01)    **G05D 1/02** (2020.01)

(52) Cooperative Patent Classification (CPC):
**G01C 21/383; G01C 21/206; G01C 21/3804;
G05D 1/0246; G05D 1/0274; G06T 7/74**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.04.2022   JP 2022069149**

(71) Applicant: **CANON KABUSHIKI KAISHA**
**Tokyo 146-8501 (JP)**

(72) Inventors:
• **OHIRA, Shinji**
  **Tokyo, 146-8501 (JP)**
• **FUJIKI, Masakazu**
  **Tokyo, 146-8501 (JP)**
• **TOMIOKA, Makoto**
  **Tokyo, 146-8501 (JP)**

(74) Representative: **TBK**
**Bavariaring 4-6**
**80336 München (DE)**

(54) **INFORMATION PROCESSING DEVICE, INFORMATION PROCESSING SYSTEM, METHOD OF CONTROLLING INFORMATION PROCESSING DEVICE, AND STORAGE MEDIUM**

(57)    An information processing device that improves accuracy of a map used to measure a position and an orientation of a movable apparatus includes: a map acquisition unit configured to acquire a map for measuring a position and an orientation of a movable apparatus; a detection unit configured to detect a visual index from a drawing information which corresponds to a real space that the movable apparatus moves or an object in the real space; a registration unit configured to perform registration of a coordinate system between the map and the drawing information; an association unit configured to perform association between the visual index included in the drawing information after the registration and a constituent element included in the map; and a correction unit configured to correct the map based on a result of the association.

FIG. 1

EP 4 266 005 A1

**Description**

BACKGROUND OF THE INVENTION

Field of the Invention

The present invention relates to an information processing device processing a map for a movable apparatus, an information processing system, a method of controlling the information processing device, and a storage medium.

Description of the Related Art

Movable apparatuses such as unmanned automated guided vehicles (AGVs) automatedly moving in environments such as factories or distribution warehouses have spread. Movable apparatuses automatedly move (autonomously travel) while performing map generation for real spaces and own position and orientation measurement in the real spaces. As a method of performing the map generation and the own position and orientation measurement, for example, a simultaneous localization and mapping (SLAM) method is known.

In order to cause movable apparatuses to autonomously travel, it is necessary to set routes along which the movable apparatuses travel in advance. As a method of setting a route, there is a method of setting via-points of a travel route of a movable apparatus on CAD data indicating an environment of a field by using the CAD data. Coordinates of via-points on the CAD data are converted into coordinates of via-points on a map generated by the SLAM and coordinates on the SLAM map are delivered as the via-points of the travel route of the movable apparatus.

However, since an accumulated error in map generation is contained in a map generated by the SLAM, the map generated by the SLAM does not completely match CAD data. To correct positional deviation, Japanese Patent No. 6893200 discloses a technology for performing matching with a real space by estimating a scale adjustment parameter from actual environment data generated by a depth sensor and a SLAM map generated from a drawing and adjusting a scale of the SLAM map using the scale adjustment parameter.

However, even if the scale adjustment disclosed in Japanese Patent No. 6893200 is performed, it is difficult to take matching between the CAD data indicating a real space and the entire SLAM map for measuring position and orientation measurement of a movable apparatus, and an error with respect to the real space may remain.

One of obj ects of the present invention is to improve accuracy of a map used for position and orientation measurement of a movable apparatus.

SUMMARY OF THE INVENTION

According to an aspect of the present invention, an information processing device includes at least one processor or circuit configured to function as: a map acquisition unit configured to acquire a map for measuring a position and an orientation of a movable apparatus; a detection unit configured to detect a visual index from a drawing information which corresponds to a real space that the movable apparatus moves or an object in the real space; a registration unit configured to perform registration of a coordinate system between the map and the drawing information; an association unit configured to perform association between the visual index included in the drawing information after the registration and a constituent element included in the map; and a correction unit configured to correct the map based on a result of the association.

Further features of the present invention will become apparent from the following description of embodiments with reference to the attached drawings.

BRIEF DESCRIPTION OF THE DRAWINGS

Fig. 1 is a diagram illustrating an exemplary functional configuration of an information processing device according to a first embodiment of the present invention.
Fig. 2 is a diagram illustrating an exemplary hardware configuration of the information processing device according to the first embodiment.
Fig. 3 is a flowchart illustrating a process of correcting a map according to the first embodiment.
Figs. 4A to 4C are diagrams illustrating registration of a coordinate system according to the first embodiment.
Figs. 5A and 5B are diagrams illustrating detection of visual indexes according to the first embodiment.
Figs. 6A and 6B are diagrams illustrating detection of visual indexes according to the first embodiment.
Figs. 7A and 7B are diagrams illustrating association between visual indexes of CAD data and feature points of a SLAM map according to the first embodiment.
Figs. 8A to 8C are diagrams illustrating examples of GUIs in a process of correcting a map according to the first embodiment.
Fig. 9 is a flowchart illustrating a process performed by an information processing device according to a second embodiment.

DESCRIPTION OF THE EMBODIMENTS

Hereinafter, with reference to the accompanying drawings, favorable modes of the present invention will be described using Embodiments. In each diagram, the same reference signs are applied to the same members or elements, and duplicate description will be omitted or simplified.

(First Embodiment)

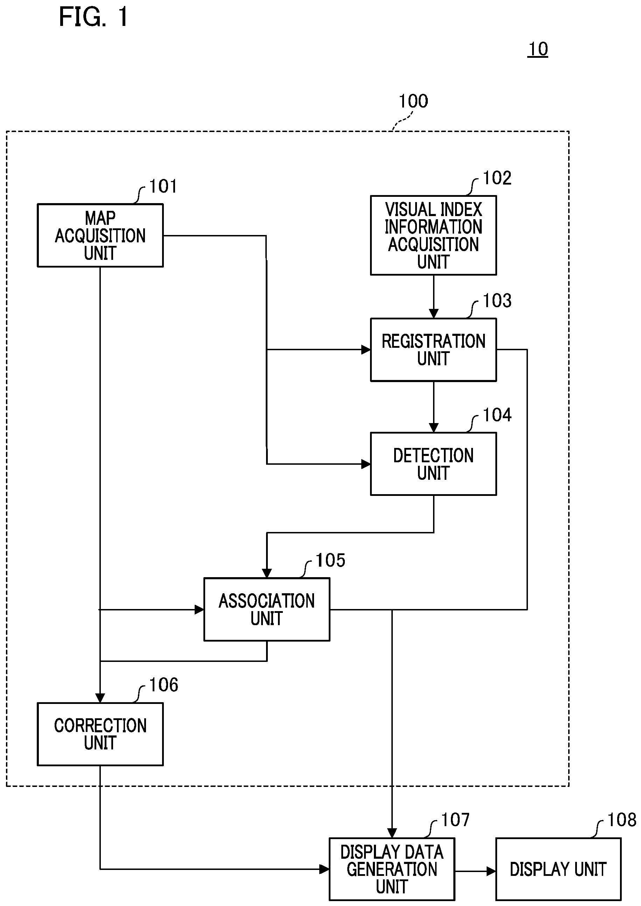

Fig. 1 is a diagram illustrating a configuration of an information processing system 10 including an information processing device 100 according to a first embodiment of the present invention. The information processing system 10 is a movable apparatus system that controls travel of a movable apparatus such as an AGV

The movable apparatus is not limited to a vehicle and may be any object as long as the object such as an automated two-wheeled vehicle, an electric cart, a robot (an autonomous mobile robot), and a drone moves.

The information processing system 10 generates a map for position and orientation measurement based on a captured image of a surrounding environment imaged by a camera (not illustrated) for position and orientation measurement and controls movement (autonomous travel) of the movable apparatus based on the map. In the embodiment, an example in which the information processing system 10 controls movement of a movable apparatus by visual SLAM will be described.

The information processing system 10 includes the information processing device 100, a display data generation unit 107, and a display unit 108. The information processing device 100 generates a map for measuring a position and an orientation of the movable apparatus. In the embodiment, a map used for measuring a position and an orientation of the movable apparatus by visual SLAM is referred to as a SLAM map.

The SLAM map is a 3-dimensional map used for measuring a position and an orientation of the movable apparatus and is generated based on a measurement result measured by a sensor such as a camera included in the movable apparatus. The SLAM map includes a plurality of pieces of key frame information.

A key frame includes images captured by the camera at the time of generation of a map, and a position and an orientation of the camera are associated with each other. Further, the SLAM map includes data of 3-dimensional coordinates of feature points detected from the captured images.

When a route of the movable apparatus is set, coordinates are designated on drawing information such as CAD data indicating a field environment which is a real space where the movable apparatus is moving. The coordinates of the CAD data are converted into coordinates of the SLAM map and via-points of a travel route are set.

However, the SLAM map generated by the visual SLAM is locally distorted due to a scale error at the time of generation of the SLAM map generated by the visual SLAM or an accumulated error caused due to distortion at the time of loop closure in some cases. Therefore, an error occurs in the CAD data and the SLAM map. Even if simple coordinate conversion such as similarity conversion from coordinates on the CAD data is performed, the coordinates on the CAD data do not completely match coordinates on the SLAM map.

Accordingly, in the embodiment, visual indexes are detected from the CAD data and 3-dimensional coordinates of feature points included in the SLAM map are corrected based on 3-dimensional coordinates of the visual indexes. A structure for the visual indexes is a structure which can be measured by a camera for a pipe, a duct, a sprinkler, an air conditioner, a lighting instrument, or the like.

In the embodiment, an example in which 3-dimensional CAD data used to design a layout of a facility such as a pipe, a duct, or a lighting instrument is used as drawing information in a field environment will be described.

The information processing device 100 includes a map acquisition unit 101, a visual index information acquisition unit 102, a registration unit 103, a detection unit 104, an association unit 105, and a correction unit 106. The map acquisition unit 101 acquires SLAM map generated by the visual SLAM.

The map acquisition unit 101 outputs the acquired SLAM map to the registration unit 103, the detection unit 104, the association unit 105, and the correction unit 106. The visual index information acquisition unit 102 acquires CAD data as a visual index detection target and outputs the CAD data to the registration unit 103.

The registration unit 103 calculates a relative positional relation between a coordinate system on the CAD data acquired by the visual index information acquisition unit 102 and a coordinate system on the SLAM map acquired by the map acquisition unit 101.

The registration unit 103 converts a coordinate system which is a reference of the CAD data into the coordinate system of the SLAM map based on the relative positional relation and outputs the converted coordinate system to the detection unit 104. In the embodiment, the coordinate systems of the CAD data and the SLAM map are unified as a coordinate system of the SLAM map, but a process after the unification to the coordinate system of the CAD data may be performed.

The detection unit 104 detects a visual index from the CAD data of which the coordinate system output by the registration unit 103 has been converted based on the SLAM map output by the map acquisition unit 101 and outputs a detection result to the association unit 105.

The association unit 105 generates a pair of sets of 3-dimensional coordinates by relating the visual index output by the detection unit 104 to a feature point included in the SLAM map acquired by the map acquisition unit 101. The association unit 105 outputs the pair of sets of 3-dimensional coordinates as an association result to the correction unit 106.

The correction unit 106 corrects 3-dimensional coordinates of the feature point included in the SLAM map acquired by the map acquisition unit 101 based on 3-dimensional coordinates of the visual index related to the feature point on the SLAM map by the association unit 105. The correction unit 106 outputs the SLAM map on which the 3-dimensional coordinates of the feature point are corrected to the display data generation unit 107.

The display data generation unit 107 and the display unit 108 control display of progresses and results of a series of processes of correcting the map (registration (position alignment) by the registration unit 103, the association by the detection unit 104 and the association unit 105, and correction by the correction unit 106).

The display data generation unit 107 generates data for visualizing output information of the registration unit 103, the association unit 105, and the correction unit 106 and outputs the generated data to the display unit 108. The display unit 108 receives the data generated by the display data generation unit 107 and outputs the received data to a display device.

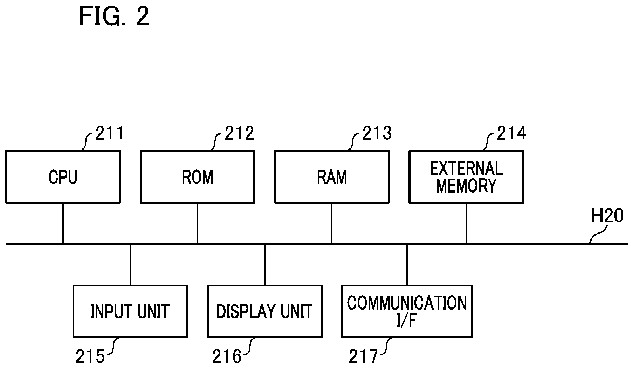

Fig. 2 is a diagram illustrating an exemplary hardware configuration of the information processing device 100 according to the first embodiment. The information processing device 100 includes a CPU 211, a ROM 212, a RAM 213, an external memory 214, an input unit 215, a display control unit 216, a communication I/F 217, and a system bus 220 connecting them to each other.

The central processing unit (CPU) 211 controls various devices connected to the system bus 220. The read-only memory (ROM) 212 stores a program such as a program of a basic input/output system (BIOS) or a boot program for controlling the information processing device 100.

The external memory 214 stores an application or a program processed by the information processing device 100, various types of data or files, and the like. The external memory 214 is, for example, a memory such as a hard disk (HD) or a solid-state drive (SSD).

The random access memory (RAM) 213 is used as a main storage device of the CPU 211. The RAM 213 also functions as a work area. The CPU 211 loads and executes a program stored in the ROM 212 or the external memory 214 on the RAM 213 and generally controls each unit connected to the system bus 220.

The input unit 215 is an input device such as a keyboard, a pointing device, a robot controller and receives an input from a user. The display control unit 216 includes a display device such as a liquid crystal display and outputs a result processed by the information processing device 100 in accordance with an instruction from the CPU 211 to the display device.

The display device may be a liquid crystal display, a projector, an LED indicator, a head-mounted display capable of realizing virtual reality (VR), or the like. The input unit 215 and the display control unit 216 may be configured as a touch panel.

By associating input coordinates on a touch panel with display coordinates, it is possible to configure a GUI on which a user can directly manipulate a screen displayed on the touch panel. The communication I/F 217 performs information communication with an external device via a network.

There is no restriction on a type of communication I/F 217 such as an Ethernet, a USB, a serial communication, or wireless communication. The network may be configured as, for example, any of a communication network such as a LAN or a WAN, a cellular network (for example, LTE, 5G, or the like), and a wireless network or a combination thereof. That is, the network may be configured to be able to transmit and receive data and any communication scheme of a physical layer may be adopted.

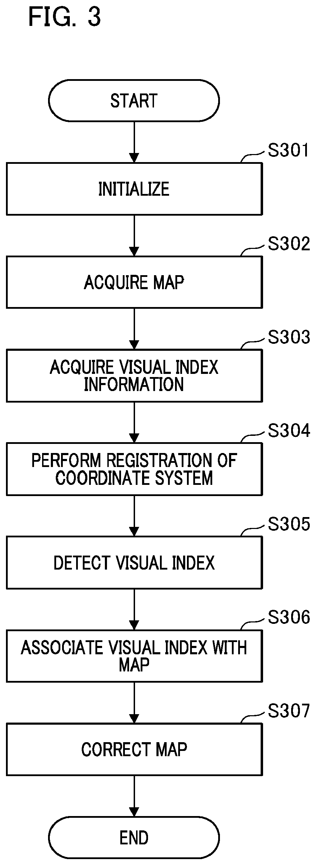

Fig. 3 is a flowchart illustrating a process of correcting a map according to the first embodiment. Each process of correcting a map illustrated in the flowchart of Fig. 3 is implemented by causing the CPU 211 of the information processing device 100 to read and execute a program stored in the ROM 212 or the external memory 214 on the RAM 213.

In step S301, the information processing device 100 is initialized. When the information processing device 100 is initialized, a program is read from the ROM 212 or the external memory 214 so that the information processing device 100 can operate. A camera parameter associated with a camera used to generate a SLAM map is read from the external memory 214 and stored in the RAM 203.

In step S302, the map acquisition unit 101 acquires the SLAM map generated by the visual SLAM. The map acquisition unit 101 outputs the acquired SLAM map to the registration unit 103, the detection unit 104, the association unit 105, and the correction unit 106.

In step S303, the visual index information acquisition unit 102 acquires visual index information corresponding to a region of the SLAM map acquired in step S301. In the embodiment, the CAD data which is target data in which the visual index is detected is acquired as the visual index information.

That is, the visual index information acquisition unit 102 acquires the CAD data indicating a layout of the entire field environment in which the SLAM map is generated. Then, the visual index information acquisition unit 102 outputs the acquired CAD data to the registration unit 103.

In step S304, the registration unit 103 performs registration between the coordinate system of the SLAM map acquired by the map acquisition unit 101 and the coordinate system of the CAD data which is the visual index information acquired by the visual index information acquisition unit 102. The registration unit 103 performs a process of converting the coordinate system of the CAD data into the coordinate system of the SLAM map as the registration.

As a method for the registration between the coordinate systems, for example, there is a method of converting the coordinates by obtaining a relative positional relation using a marker provided physically in a real space. Here, the marker such as a plane figure which is not point-symmetry and a line target is used to define a position and an orientation.

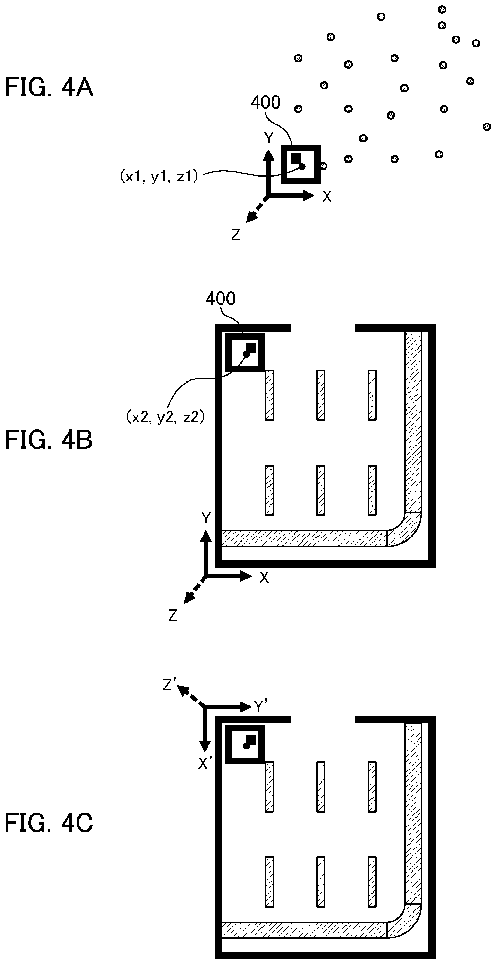

A method of performing registration of a coordinate system using a marker will be described with reference to Figs. 4A to 4C. Figs. 4A to 4C are diagrams illustrating registration of a coordinate system according to the first embodiment. Fig. 4A is a diagram illustrating disposition of a marker 400 in a coordinate space of the SLAM map.

In Fig. 4A, (x1, y1, z1) are coordinates of the marker 400. Fig. 4B is a diagram illustrating disposition of the marker 400 in a coordinate space of the CAD data. In Fig. 4B, (x2, y2, z2) are coordinates of the marker 400.

It is assumed that the 3-dimensional coordinates on the CAD data are known, and a position and an orientation of the marker is expressed by Mc which is a $4 \times 4$ matrix. The 3-dimensional coordinates on the SLAM map can be obtained, for example, by using a method of estimating disposition information of a marker disclosed in Japanese Patent No. 4522140, and a 3-dimensional position and orientation of a marker on the SLAM map is Ms which is a $4 \times 4$ matrix.

It is assumed that the positions and the orientations of the markers in the coordinate system of the CAD data and the coordinate system of the SLAM map match each other in the real space. Therefore, when a conversion matrix for converting any coordinates on the CAD data into coordinates on the SLAM map is Msc, Msc is expressed as in the following Expression (1).

$$Msc=MsMc\text{-}1 \quad \ldots (1)$$

Here, Mc-1 is an inverse matrix of Mc. The registration unit 103 performs registration of the coordinate systems by converting the coordinate system of the CAD data into the coordinate system of the SLAM map using the conversion matrix Msc.

Fig. 4C is a diagram illustrating conversion of the coordinate system of the CAD data into the coordinate system of the SLAM map by the conversion matrix Msc. The coordinate axis of the CAD data after the coordinate conversion is X'Y'Z' of Fig. 4C. In this way, the conversion matrix Msc is obtained based on the 3-dimensional coordinates of the markers on the two coordinate systems, and the coordinate system of the CAD data can be converted into the coordinate system of the SLAM map by the conversion matrix Msc.

The registration unit 103 outputs the CAD data of which the coordinates are converted to the detection unit 104 and the display data generation unit 107. A method for the registration between the coordinates systems of the SLAM map and the CAD data is not limited to the method using the marker, but another coordinate conversion method may be used.

In step S305, the detection unit 104 detects the visual index from the CAD data of which the coordinate axis has been converted by the registration unit 103. In the embodiment, an example in which feature points are used as a visual index will be described.

Here, a feature point is a pixel of which a luminance gradient is greater than a threshold, such as an intersection or a corner point of an edge on an image. A feature point detected from the CAD data is identical to a constituent element of the SLAM map acquired by the map acquisition unit 101.

The detection unit 104 detects a feature point from the CAD data by performing image processing to detect a pixel of which a luminance gradient is greater than a threshold after generation of an image in which the CAD data is drawn by CG from the same viewpoint as any key frame included in the SLAM map. Specifically, any key frame included in the SLAM map is selected and the CAD data is drawn by CG based on a position and an orientation of a camera imaging the key frame.

Here, since the coordinate system of the CAD data is aligned with the coordinate system of the SLAM map in step S304, the 3-dimensional coordinates on the SLAM map can be handled as the same coordinates on the CAD data. In a 2-dimensional image obtained by CG drawing, a feature point serving as a visual index is detected through image processing.

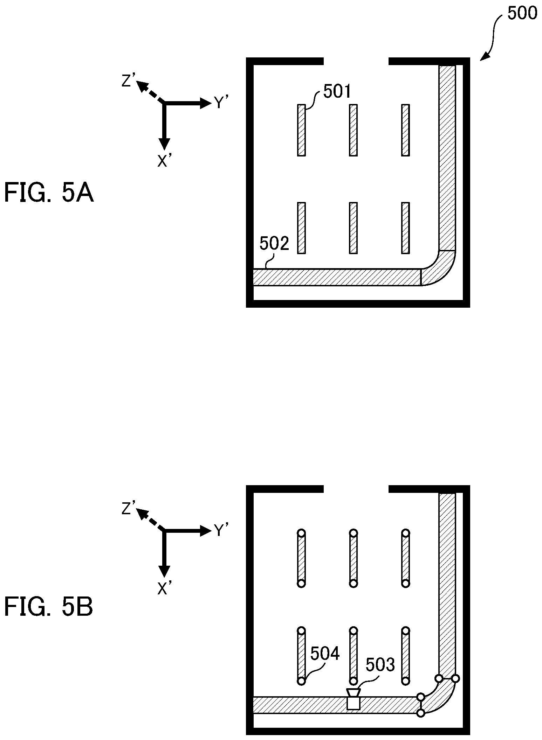

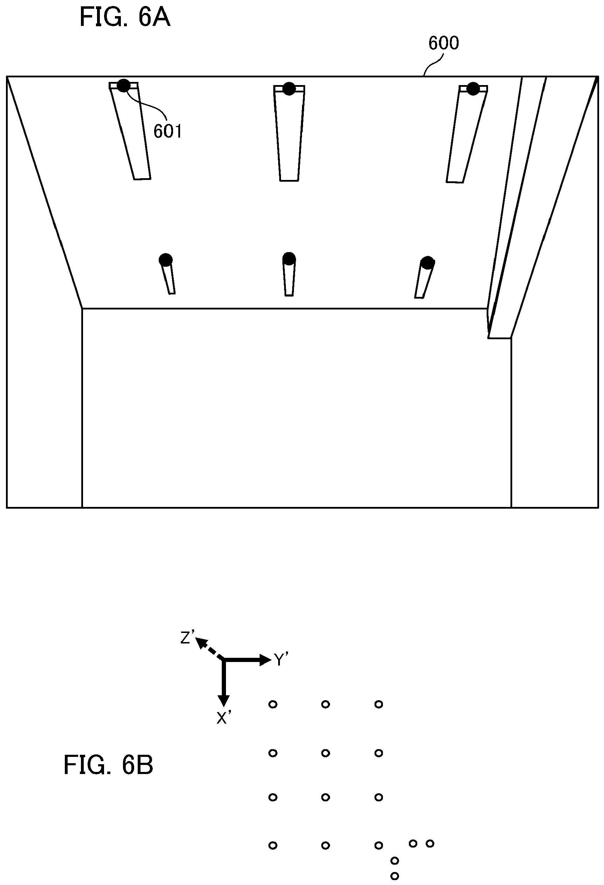

Figs. 5A, 5B, 6A, and 6B are diagrams illustrating detection of visual indexes according to the first embodiment. Fig. 5A is a diagram illustrating CAD data when viewed from the upper side. In CAD data 500, a lighting instrument 501 and a pipe 502 serving as visual indexes are disposed.

Fig. 5B is a diagram illustrating a feature point and a position and an orientation of a camera imaging a key frame on the CAD data. A camera 503 indicates a position and an orientation of the camera imaging the key frame when the SLAM map is generated. When the CAD data is drawn by CG at the position and the orientation of the camera 503, a 2-dimensional image 600 illustrated in Fig. 6A is generated.

Fig. 6A is a diagram illustrating an example of a camera viewpoint image when a visual index is detected. The detection unit 104 detects a feature point serving as a visual index from the 2-dimensional image 600. In the 2-dimensional image 600, for example, a feature point is detected at a position indicated by a black point.

A position of a feature point 601 illustrated in Fig. 6A corresponds to a position of a point 504 of the CAD data illustrated in Fig. 5B. Fig. 6B is a diagram illustrating all the detected feature points in a coordinate space of the CAD data.

The detection unit 104 detects the feature points repeatedly as the number of key frames included in the SLAM map. When the detection of the feature points in all the key frames is completed, the detection unit 104 outputs arrangement of the 3-dimensional coordinates of all the detected feature points as visual indexes to the association unit 105.

In step S306, the association unit 105 associates (relates) the visual indexes on the CAD data with (to) constituent elements on the SLAM map. In the embodiment, since the visual indexes on the CAD data are the same as the feature points of the constituent elements included in the SLAM map, the visual indexes on the CAD data are related to the feature points of the SLAM map.

As a specific relating method, for example, a nearest feature point on the SLAM map is selected and associated with the visual index on the CAD data. In the embodiment, since the coordinate system of the CAD data is converted into the coordinate system of the SLAM map in step S304, the 3-dimensional coordinates on the CAD data can be handled as coordinates in the same coordinate space as that of the 3-dimensional coordinates on the SLAM map.

Therefore, the association unit 105 may select and associate feature points at which a Euclid distance between two points of the visual index on the CAD data and the feature point on the SLAM map is minimum. The association unit 105 associates all the visual indexes.

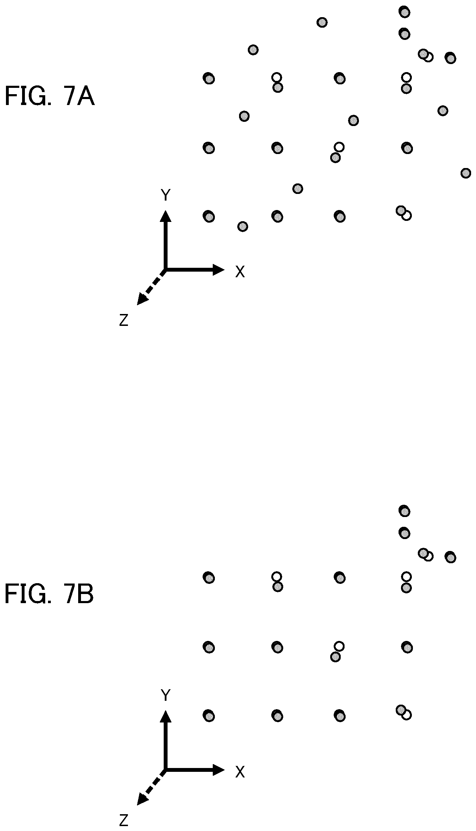

Figs. 7A and 7B are diagrams illustrating association between visual indexes of CAD data and feature points of the SLAM map according to the first embodiment. In Figs. 7A and 7B, the visual indexes of the CAD data and the feature points on the SLAM map are superimposed and indicated on the coordinate space. A white point indicates a visual index of the CAD data and a gray point indicates a feature point of the SLAM map.

Fig. 7A is a diagram illustrating visual indexes and feature points before the association is performed. Fig. 7B is a diagram illustrating visual indexes and feature points after the association is performed. In Fig. 7B, only a visual index and a feature point associated with the visual index near each visual index remain and a feature point of the SLAM map not associated with the visual index is excluded.

The visual indexes of the CAD data and the feature points of the SLAM map have one-to-one correspondence and are in a state in which the numbers are matched. The association unit 105 generates arrangement of pairs of 3-dimensional coordinates of the feature points of the visual indexes and associated 3-dimensional coordinates of the feature points of the SLAM map and outputs the arrangement of the pairs to the correction unit 106.

In step S307, the correction unit 106 corrects the 3-dimensional coordinates of the feature points included in the SLAM map acquired by the map acquisition unit 101 based on the 3-dimensional coordinates of the visual indexes associated with the feature points on the SLAM map.

The correction unit 106 first replaces the 3-dimensional coordinates of the feature points of the SLAM map with the 3-dimensional coordinates of the visual indexes based on the pairs of 3-dimensional coordinates of the feature points output by the association unit 105 in order to set the visual indexes as true values.

Subsequently, a group of the feature points replaced with the 3-dimensional coordinates is fixed to optimize the SLAM map. As an optimization scheme, for example, bundle adjustment is used. Here, the bundle adjustment is generally a method of minimizing a re-projection error.

Therefore, estimation is performed in combination with a method such as Skrypnyk (I. Skrypnyk and D. G. Lowe, "Scene modelling, recognition and tracking with invariant image features," Proc. 3rd IEEE and ACM International Symposium on Mixed and Augmented Reality, pp. 110 to 119, 2004) of estimating a position and an orientation so that a sum of a re-projection error and a difference in a position and an orientation between key frames is minimum.

As described above, according to the embodiment, it is possible to reduce an error between a 3-dimensional map (a SLAM map) used to measure a position and an orientation of a movable apparatus in a system for the movable apparatus autonomously traveling by the visual SLAM and a map (CAD data) indicating a real space. Accordingly, it is possible to reduce an error contained in the map (the SLAM map) used to measure the position and the orientation of the movable apparatus, and thus improve accuracy of the map.

(Modification 1-1)

In the first embodiment, the example in which the visual SLAM is used as a scheme of measuring a position and an orientation of a movable apparatus has been described, but the present invention is not limited thereto. Any scheme may be used as long as the scheme is a scheme capable of measuring a position and an orientation of the movable apparatus based on a map.

For example, a position and an orientation of a movable apparatus may be measured by a LiDAR SLAM or a SLAM using a sensor such as a depth camera. When a map used to measure a position and an orientation as in a 2D LiDAR SLAM is a 2-dimensional map generated from a distance value to an object, an edge estimated from vertex information included in CAD data may be used as a visual index.

By matching the edge acquired from the CAD data with an edge on a SLAM map, fixing the matched edges, and adjusting a position or an orientation of another edge on the SLAM map, it is possible to correct a map.

When a map used to measure a position and an orientation as in a 3D LiDAR or a depth camera is an aggregate of 3-dimensional point groups, information regarding surfaces may be used as a visual index. A surface divided in an edge from each of the CAD data and the SLAM map is extracted, a CAD surface is matched with the surface extracted from the 3-dimensional point group, and coordinates of the matched 3-dimensional point group are corrected in accordance with the CAD surfaces.

Coordinates of a point group indicating a corrected surface can be fixed and all the feature points included in the SLAM map can be corrected through an optimization process. In this way, in the scheme of measuring the position and the posture of the movable apparatus, feature points can be extracted from distance information or the like even when an image is not captured. The visual index is not limited to a lighting instrument or a pipe and may be a portion in which an edge is easily detected or a surface divided in an edge.

(Modification 1-2)

In the first embodiment, the detection unit 104 detects the visual indexes by performing image processing after the CAD data is drawn by CG at the same viewpoint as that of the key frame included in the SLAM map, but the present invention is not limited thereto.

In the first embodiment, the feature point which is a pixel of which a luminance gradient is greater than the threshold is used as the visual index, but the present invention is not limited thereto. A method of detecting a visual index may be any detection method as long as a target defined as a visual index can be detected from the CAD data.

For example, a point which is an intersection of a line may be obtained from vertex information of an object included in CAD data and may be set as a visual index. A straight line may be obtained from the vertex information of the CAD data and a straight line with a length equal to or greater than a threshold may be detected as an edge, and the edge is set as a visual index or an endpoint of an edge may be set as a visual index.

Further, a surface divided in an edge from each of the CAD data may be extracted, and an edge of an interface when a corner forming two surfaces is within a threshold may be set as a visual index. In addition, a feature point, an edge, or the like may be detected through image processing after conversion of CAD data into a 2-dimensional image through orthogonal projection conversion or the like, and the feature point, the edge, or the like may be set as a visual index.

(Modification 1-3)

In the first embodiment, the method in which a marker of which coordinates on the CAD data are known is used has been described as a method in which the registration unit 103 performs registration between the coordinate systems of the CAD data and the SLAM map in step S304, but the present invention is not limited thereto.

The registration method may be any registration method as long as registration of the coordinate systems of the CAD data and the SLAM map can be performed. For example, instead of the marker, a movable apparatus on which a camera is mounted may be used. When the movable apparatus stops at known coordinates on the CAD data, a position and an orientation of the camera may be estimated and a relative positional relation between the coordinate systems of the CAD data and the SLAM map may be obtained based on information regarding the position and the posture.

When a map used to measure the position and the posture is a map including edge information such as a 2D LiDAR SLAM, portions corresponding to a wall or a pillar of the CAD data and a wall or a pillar of the SLAM map may be matched to obtain a relative positional relation.

(Modification 1-4)

In the first embodiment, when the visual indexes of the CAD data are associated with the constituent elements included in the SLAM map of step S306, the visual indexes and the feature points included in the SLAM map are the same and thus directly related, but the present invention is not limited thereto.

The association method may be any method as long as the visual indexes of the CAD data can be associated with the constituent elements included in the SLAM map. For example, the association unit 105 may associate different types of features, for example, by relating an end point of an edge extracted from the CAD data to a constituent element included in the SLAM map.

(Modification 1-5)

In the first embodiment, the information processing device 100 may perform setting or processes until correction of the SLAM map when a user gives an instruction using a GUI displayed on the display unit 108.

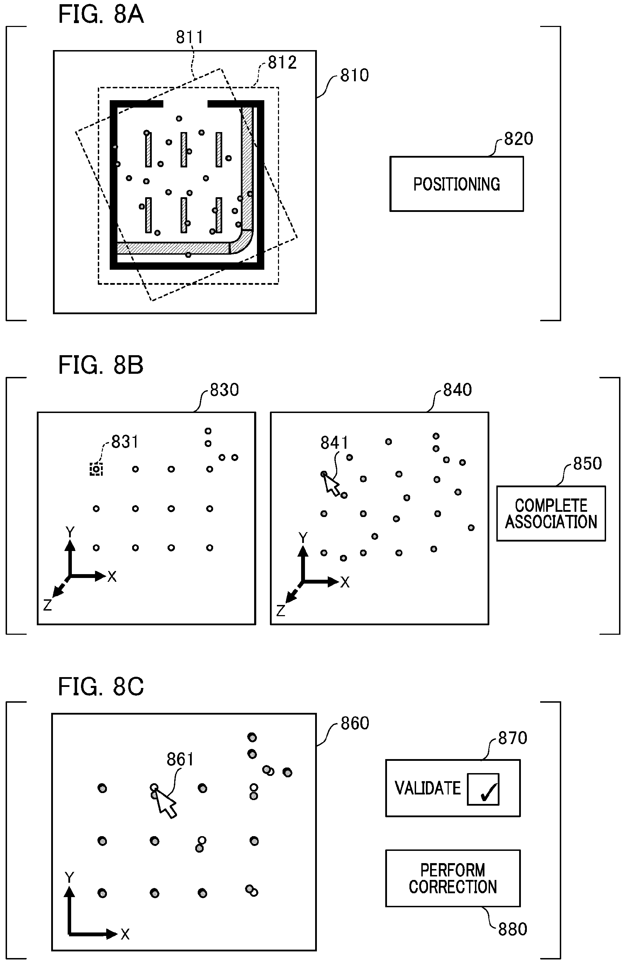

Figs. 8A to 8C are diagrams illustrating examples of GUIs in a process of correcting a map according to the first embodiment. A GUI of a map correction process is generated by the display data generation unit 107 and is displayed on the display unit 108 when the map correction process is performed.

Fig. 8A is a diagram illustrating a GUI for performing the registration of step S304. In a GUI 810, a SLAM map 811 and CAD data 812 are displayed. In the example illustrated in Fig. 8A, the SLAM map 811 and the CAD data 812 viewed from the upper side (viewed in the same direction) are displayed.

The user adjusts the SLAM map 811 superimposed and displayed on the CAD data 812 so that the coordinate systems are matched by translating, rotating, and expanding or contracting the SLAM map 811 and presses a positioning button 820. When it is detected that the positioning button 820 in the information processing device 100 is pressed, the registration unit 103 acquires a result of the registration by the user via the input unit 215 and outputs the result to the detection unit 104 and the display data generation unit 107.

Fig. 8B is a diagram illustrating a GUI for performing association between the visual indexes of the CAD data and the feature points of the SLAM map in step S306. A GUI 830 shows that the visual indexes on the CAD data are mapped on the coordinate space.

A GUI 840 shows that the visual indexes on the SLAM map are mapped on the coordinate space. The conversion in step S304 is completed so that the coordinate system on the CAD data of the GUI 830 are unified with the coordinate system of the SLAM map of the GUI 840.

Fig. 8B illustrates an example in which an XY plane of the SLAM map and the CAD data is viewed in the positive direction of the Z axis. The user first selects a visual index on the CAD data in the GUI 830.

Subsequently, the user selects a visual index associated with the visual index selected in the GUI 830 on the SLAM map of the GUI 840. In an example of Fig. 8B, a visual index 831 is selected in the GUI 830 and a visual index 841 is selected as a corresponding visual index in the GUI 840.

When a visual index on the SLAM map displayed in the GUI 840 is associated with each of all the visual indexes on the CAD data displayed in the GUI 830, the user presses a completion button 850. When it is detected that the completion button 850 in the information processing device 100 is pressed, the association unit 105 acquires a result of the association by the user via the input unit 215 and outputs the result to the correction unit 106 and the display data generation unit 107.

Fig. 8C is a diagram illustrating a GUI for selecting visual indexes used for the correction process of step S307. In a GUI 860, visual indexes on the CAD data and visual indexes on the associated SLAM map are superimposed and displayed.

In an example of Fig. 8C, the GUI 860 is illustrated as a plan view when an XY plane is viewed in the Z axis direction. A user sets whether each visual index displayed in the GUI 860 is used for a correction process by using a check box 870.

For example, the user selects the visual indexes on the CAD data in the GUI 860 and checks the check box 870 when the visual indexes which are being selected are used for the correction process. Conversely, the check box 870 is empty when the visual indexes which are being selected are not used for the correction process.

When the setting of whether all the visual indexes on the CAD data displayed in the GUI 860 are used for the correction process is completed, the user presses a correction execution button 880. When it is detected that the correction execution button 880 in the information processing device 100 is pressed, the correction unit 106 performs the correction process of step S307 using the visual indexes on the CAD data selected by the user and the visual indexes on the SLAM map corresponding thereto.

Here, the example in which the visual indexes on the CAD data are selected in the GUI 860 has been described, but selection targets may be the visual indexes on the SLAM map. Whether to use the visual indexes which are being selected may not be set in the check box 870, but may be set by selecting only the visual indexes used for the correction process in the GUI 860 and pressing the correction execution button 880.

Of the visual indexes, a visual index desired not to be used to correct the SLAM map may be selected and excluded. The GUIs illustrated in Figs. 8A to 8C can be used by the user correcting the SLAM map while setting processes until correction of the SLAM map or confirming a result on the way.

(Second Embodiment)

In the first embodiment, the SLAM map has been corrected using the visual indexes detected from the CAD data corresponding to a real space of the field environment where the movable apparatus is moving. In a second embodiment, an example in which the SLAM map is corrected using machines or the like provided later in an environment as visual indexes will be described.

While the visual indexes are detected from the CAD data of the field environment in the first embodiment, visual indexes are detected from the CAD data for each machine in the second embodiment. A position and an orientation of an increased machine are assumed to be known as a position and an orientation on CAD data of a field environment. A configuration of the information processing device 100 according to the embodiment is similar to that of the first embodiment, and thus description thereof will be omitted.

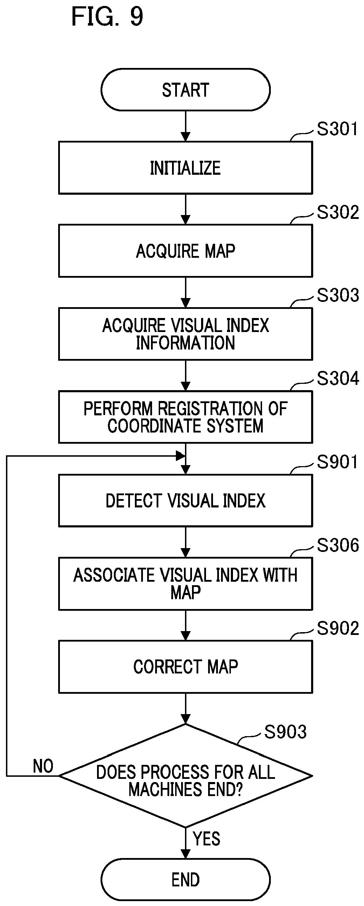

Fig. 9 is a flowchart illustrating a process of correcting a map according to the second embodiment. Each process of correcting a map in the flowchart of Fig. 9 is implemented by causing the CPU 211 of the information processing device 100 to read and execute a program stored in the ROM 212 or the external memory 214 on the RAM 213. Hereinafter, differences from the first embodiment will be described. The same reference numerals are given to processes similar to those of the first embodiment and description thereof will be omitted.

When the registration between coordinate systems of the CAD data and the SLAM map in step S304 is completed, a process of step S901 is performed. When there is CAD data of machines provided in a plurality of real spaces, processes of steps S901 to S903 are performed on one piece of CAD data and similar processes are repeated on the CAD data of the remaining machines.

In step S901, the detection unit 104 detects visual indexes from the CAD data of the provided machines. Detection targets are different, but a method of detecting the visual indexes is the same as that of the first embodiment. Since a coordinate system of the CAD data of the provided machine is different from a coordinate system of the CAD data of the field environment, the detection unit 104 converts 3-dimensional coordinates of the visual indexes detected using positional information of the provided machines in the CAD data of the field environment into a coordinate system on the CAD data of the field environment.

When the process of step S901 is completed, the process of step S306 is subsequently performed. When the process of step S306 is completed, the process of step S902 is subsequently performed.

In step S902, the correction unit 106 corrects the 3-dimensional coordinates of the feature points on the SLAM map based on the 3-dimensional coordinates of the visual indexes of the CAD data associated with the feature points of the SLAM map. The correction unit 106 corrects the 3-dimensional coordinates by optimizing the SLAM map by performing a bundle adjustment similar to that of the first embodiment.

When a process of correcting the SLAM map is performed based on CAD data of a previously provided machine, feature points near a position at which the corrected machine is provided are fixed as an optimized state and the bundle adjustment is performed on feature points at which the optimization ends. When the process of step S902 is completed, the process of S903 is subsequently performed.

In step S903, the correction unit 106 determines whether to perform the process of correcting the SLAM map using the CAD data of all the machines. When the processes from step S901 to step S902 on all the provided machines are completed, the present process ends.

Conversely, when the processes from step S901 to step S902 on the all the provided machines are not completed, the process returns to step S901 and the processes from step S901 to step S902 are continued on the machine on which the process has not been completed. In the embodiment, the example in which the CAD data of the machines is used has been described, but the present invention is not limited to the machines and CAD data of an object provided in the field environment may be used.

In the embodiment, by fixing feature points near the machines already used for the correction, it is possible to guarantee accuracy of position and orientation measurement in the periphery of all the machines. By using the CAD data of the plurality of machines increased after the installation of a facility in an environment, it is possible to reduce an error contained in a 3-dimensional map used for the position and orientation measurement by the movable apparatus.

Accordingly, by correcting the SLAM map using the visual indexes detected from the CAD data of each machine after correcting the SLAM map based on the CAD data of the field environment, it is possible to improve accuracy of the SLAM map.

The present invention includes a combination of the first and second embodiments. While the present invention has been described with reference to exemplary embodiments, it is to be understood that the invention is not limited to the disclosed exemplary embodiments.

The scope of the following claims is to be accorded the broadest interpretation to encompass all such modifications and equivalent structures and functions.

In addition, as a part or the whole of the control according to the embodiments, a computer program realizing the function of the embodiments described above may be supplied to the information processing device through a network or various storage media. Then, a computer (or a CPU, an MPU, or the like) of the information processing device may be configured to read and execute the program. In such a case, the program and the storage medium storing the program configure the present invention.

This application claims the benefit of Japanese Patent Application No. 2022-069149, filed on April 20, 2022, which is hereby incorporated by reference herein in its entirety.

An information processing device that improves accuracy of a map used to measure a position and an orientation of a movable apparatus includes: a map acquisition unit configured to acquire a map for measuring a position and an orientation of a movable apparatus; a detection unit configured to detect a visual index from a drawing information which corresponds to a real space that the movable apparatus moves or an object in the real space; a registration unit configured to perform registration of a coordinate system between the map and the drawing information; an association unit configured to perform association between the visual index included in the drawing information after the registration and a constituent element included in the map; and a correction unit configured to correct the map based on a result of the association.

**Claims**

1. An information processing device comprising at least one processor or circuit configured to function as:

   a map acquisition unit configured to acquire a map for measuring a position and an orientation of a movable apparatus;
   a detection unit configured to detect a visual index from a drawing information which corresponds to a real space that the movable apparatus moves or an object in the real space;
   a registration unit configured to perform registration of a coordinate system between the map and the drawing information;
   an association unit configured to perform association between the visual index included in the drawing information after the registration and a constituent element included in the map; and
   a correction unit configured to correct the map based on a result of the association.

2. The information processing device according to claim 1, wherein the visual index includes a feature point or an edge.

3. The information processing device according to claim 1, wherein the detection unit generates an image associated with an arbitrary key frame of the map based on the drawing information and detects the visual index from the image.

4. The information processing device according to claim 1, wherein the drawing information includes CAD data.

5. The information processing device according to claim 1, wherein the map is generated by measuring a surrounding environment of the movable apparatus by a sensor included in the movable apparatus.

6. The information processing device according to claim 1, wherein the map includes a 3-dimensional map used for SLAM for measuring a position and an orientation of the movable apparatus.

7. An information processing system comprising at least one processor or circuit configured to function as:

   a map acquisition unit configured to acquire a map for measuring a position and an orientation of a movable apparatus;
   a detection unit configured to detect a visual index from a drawing information which corresponds to a real space that the movable apparatus moves or an object in the real space;
   a registration unit configured to perform registration of a coordinate system between the map and the drawing information;
   an association unit configured to perform association between the visual index included in the drawing information after the registration and a constituent element included in the map;
   a correction unit configured to correct the map based on a result of the association; and
   a display unit configured to control display of progresses or results of at least one of the registration, the association, and the correction of the map.

8. A method of controlling an information processing device that corrects a map for measuring a position and an orientation of a movable apparatus, the method comprising:

   acquiring the map;
   detecting a visual index from a drawing information which corresponds to a real space that the movable apparatus moves or an object in the real space;

performing registration of a coordinate system between the map and the drawing information;
performing association between the visual index included in the drawing information after the registration and a constituent element included in the map; and
correcting the map based on a result of the association.

9. A non-transitory computer-readable storage medium configured to store a computer program comprising instructions for executing following processes:

   acquiring the map;
   detecting a visual index from a drawing information which corresponds to a real space that the movable apparatus moves or an object in the real space;
   performing registration of a coordinate system between the map and the drawing information;
   performing association between the visual index included in the drawing information after the registration and a constituent element included in the map; and
   correcting the map based on a result of the association.

FIG. 1

10

100

```
┌ 101
MAP
ACQUISITION
UNIT

┌ 102
VISUAL INDEX
INFORMATION
ACQUISITION
UNIT

┌ 103
REGISTRATION
UNIT

┌ 104
DETECTION
UNIT

┌ 105
ASSOCIATION
UNIT

┌ 106
CORRECTION
UNIT

┌ 107
DISPLAY DATA
GENERATION
UNIT

┌ 108
DISPLAY UNIT
```

FIG. 2

```
   ┌211          ┌212          ┌213          ┌214
┌────────┐  ┌────────┐  ┌────────┐  ┌──────────┐
│        │  │        │  │        │  │ EXTERNAL │
│  CPU   │  │  ROM   │  │  RAM   │  │  MEMORY  │
└────────┘  └────────┘  └────────┘  └──────────┘
                                               H20
─────┬──────────┬───────────┬───────────┬──────────
     │          │           │           │
┌──────────┐ ┌──────────┐ ┌──────────────┐
│INPUT UNIT│ │DISPLAY   │ │COMMUNICATION │
│          │ │  UNIT    │ │    I/F       │
└──────────┘ └──────────┘ └──────────────┘
   215          216            217
```

# FIG. 3

```
                    START
                      │
                      ▼
         ┌──────────────────────────┐  ⌐S301
         │        INITIALIZE         │
         └──────────────────────────┘
                      │
                      ▼
         ┌──────────────────────────┐  ⌐S302
         │       ACQUIRE MAP         │
         └──────────────────────────┘
                      │
                      ▼
         ┌──────────────────────────┐  ⌐S303
         │   ACQUIRE VISUAL INDEX    │
         │       INFORMATION         │
         └──────────────────────────┘
                      │
                      ▼
         ┌──────────────────────────┐  ⌐S304
         │  PERFORM REGISTRATION OF  │
         │     COORDINATE SYSTEM     │
         └──────────────────────────┘
                      │
                      ▼
         ┌──────────────────────────┐  ⌐S305
         │    DETECT VISUAL INDEX    │
         └──────────────────────────┘
                      │
                      ▼
         ┌──────────────────────────┐  ⌐S306
         │  ASSOCIATE VISUAL INDEX   │
         │         WITH MAP          │
         └──────────────────────────┘
                      │
                      ▼
         ┌──────────────────────────┐  ⌐S307
         │       CORRECT MAP         │
         └──────────────────────────┘
                      │
                      ▼
                     END
```

FIG. 4A

400

(x1, y1, z1)

Y

X

Z

400

FIG. 4B

(x2, y2, z2)

Y

X

Z

Z'

Y'

X'

FIG. 4C

500

Z'

Y'

501

X'

FIG. 5A

502

Z'

Y'

X'

FIG. 5B

504

503

FIG. 6A

FIG. 6B

FIG. 7A

FIG. 7B

## FIG. 8A

## FIG. 8B

## FIG. 8C

## FIG. 9

```
           ┌─────────────┐
           │    START    │
           └──────┬──────┘
                  │
                  ▼              ⌐S301
           ┌─────────────┐
           │  INITIALIZE │
           └──────┬──────┘
                  │
                  ▼              ⌐S302
           ┌─────────────┐
           │ ACQUIRE MAP │
           └──────┬──────┘
                  │
                  ▼              ⌐S303
           ┌─────────────────┐
           │ ACQUIRE VISUAL  │
           │ INDEX           │
           │ INFORMATION     │
           └──────┬──────────┘
                  │
                  ▼              ⌐S304
           ┌─────────────────┐
           │ PERFORM         │
           │ REGISTRATION OF │
           │ COORDINATE      │
           │ SYSTEM          │
           └──────┬──────────┘
                  │
                  ▼              ⌐S901
           ┌─────────────────┐
      ──►  │ DETECT VISUAL   │
           │ INDEX           │
           └──────┬──────────┘
                  │
                  ▼              ⌐S306
           ┌─────────────────┐
           │ ASSOCIATE       │
           │ VISUAL INDEX    │
           │ WITH MAP        │
           └──────┬──────────┘
                  │
                  ▼              ⌐S902
           ┌─────────────────┐
           │  CORRECT MAP    │
           └──────┬──────────┘
                  │
                  ▼              ⌐S903
               ◇─────────◇
      NO      ╱ DOES       ╲
     ◄───────◇  PROCESS FOR ◇
              ╲ ALL MACHINES╱
               ╲  END?     ╱
                ◇────┬────◇
                     │ YES
                     ▼
              ┌─────────────┐
              │     END     │
              └─────────────┘
```

Europäisches
Patentamt

European
Patent Office

Office européen
des brevets

## EUROPEAN SEARCH REPORT

Application Number

EP 23 16 5134

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/098135 A1 (GANJINEH TINOSCH [NL] ET AL) 26 March 2020 (2020-03-26) * paragraphs [0027], [0053], [0069], [0092], [0093], [0115], [0119] – [0121], [0221]; claim 19 * ----- | 1-9 | INV. G01C21/20 G01C21/00 G06T7/73 G05D1/02 |

TECHNICAL FIELDS
SEARCHED (IPC)

G01C
G06T
G05D

The present search report has been drawn up for all claims

| Place of search | Date of completion of the search | Examiner |
|---|---|---|
| The Hague | 13 September 2023 | Rocca, Simone |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 23 16 5134

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2023

| Patent document cited in search report | | Publication date | Patent family member(s) | Publication date |
|---|---|---|---|---|
| US 2020098135 | A1 | 26-03-2020 | CN 110062871 A | 26-07-2019 |
| | | | EP 3551967 A2 | 16-10-2019 |
| | | | JP 7213809 B2 | 27-01-2023 |
| | | | JP 2020516853 A | 11-06-2020 |
| | | | JP 2023022193 A | 14-02-2023 |
| | | | KR 20190094405 A | 13-08-2019 |
| | | | US 2020098135 A1 | 26-03-2020 |
| | | | US 2023129620 A1 | 27-04-2023 |
| | | | WO 2018104563 A2 | 14-06-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6893200 B
- JP 4522140 B

- JP 2022069149 A

**Non-patent literature cited in the description**

- **I. SKRYPNYK ; D. G. LOWE.** Scene modelling, recognition and tracking with invariant image features. *Proc. 3rd IEEE and ACM International Symposium on Mixed and Augmented Reality,* 2004, 110-119